# EUROPEAN PATENT APPLICATION

(11) **EP 0 960 644 A1**
(43) Date of publication of application: **01.12.1999**
(21) Application number: 98900407.2
(22) Date of filing: 16.01.1998
(51) Int. Cl.: B01D 39/14

(54) **FILTER MEDIUM AND AIR FILTER UNIT USING THE SAME**

(30) Priority: 20.01.1997 JP 800597
(71) Applicant: DAIKIN INDUSTRIES, LTD., Kita-ku, Osaka 530 (JP)
(72) Inventor: TAMARU, Shinji, 1-1, Nishihitotsuya Settsu-shi Osaka 566 (JP); YAMAMOTO, Katsutoshi, 1-1, Nishihitotsuya Settsu-shi Osaka 566 (JP); KUSUMI, Toshio, 1-1, Nishihitotsuya Settsu-shi Osaka 566 (JP); ASANO, Jun, 1-1, Nishihitotsuya Settsu-shi Osaka 566 (JP)
(74) Representative: Flaccus, Rolf-Dieter, Dr.
(86) International application number: JP9800160
(87) International publication number: WO9831451

(57) **Abstract**

A filter medium by use of which a long-life compact air cleaning system having a function of removing floating fine particles from the air, and a function of decomposing organisms for deodorizing and antibacterial effects is provided. This filter medium is fabricated by superposing a uniaxial oriented film of titanium oxide-containing unbaked PTFE on a uniaxial oriented film of semi baked PTFE, forming a laminated film by stretching these films in the widthwise direction thereof, and laminating nonwoven cloths of resin on both sides of the laminated film. In this filter medium, the titanium oxide-containing PTFE film layer acts as a breathing layer (2) having a function of a photocatalyst, the titanium oxide non-containing PTFE film layer acts as a breathing layer (3) having a floating particle capturing function, and the resin nonwoven cloth layers act as breathing support layers (4a, 4b).

## Description

### Technical Field

The present invention relates to a filter medium and an air filter unit using the same. The filter medium and the air filter unit using the same are used for, for example, cleaning the air in clean rooms, in apparatus for manufacturing liquid crystal or semiconductor devices, etc.

### Background Art

In the fields of medical, food, biotechnology and semiconductor industries, an air cleaning is important for improving the quality of products, etc. The air cleaning is carried out not only for removing floating fine particles but also for deodorizing purposes, antibacterial purposes, etc. In order to achieve such objects, the following air cleaning systems conventionally have been known, some of which have been used.

For example, an air cleaning system combining a chemical filter in which an adsorbent such as activated carbon etc. is filled in a column and an air filter unit is known (see, for example, Publication No. JP 7-226382 A). In this air cleaning system, deodorization is carried out by adsorbing gases to the adsorbent and the air filter captures and removes floating fine particles. Furthermore, an air conditioning apparatus combining a sterilizing filter (unit) using a photocatalyst such as titanium oxide etc. and an air filter unit is known (see, for example, Publications JP No. 7-284523 A and JP No. 7-284522 A). The photocatalyst generates active species such as active oxygen etc. by light irradiation, thus functioning to decompose organic matters (including microorganisms such as bacteria etc.) existing therearound. Therefore, in this apparatus, a sterilizing filter (unit) having a photocatalyst decomposes and removes organic matters that cause bad odor to thus carry out antibacterial deodorization, and the air filter captures and removes floating fine particles.

However, the air cleaning system using the chemical filter usually has a lifetime of about a year, because there is a limitation in the amount that the adsorbent can adsorb gases. Therefore, in this air cleaning system, the operation of a clean room etc. should be stopped for exchanging chemical filters, thus affecting the operation in the clean room. Moreover, in the air cleaning apparatus using photocatalyst, the lifetime problem can be solved. However, since it uses two units, the air cleaning apparatus becomes larger in size, thus preventing the effective use of space. Furthermore, such apparatus is disadvantageous in cost.

### Disclosure of Invention

It is therefore an object of the present invention to provide a filter medium and an air filter unit that can fabricate a long-life and small and compact air cleaning system having a function of removing floating fine particles in the air and a function of decomposing organic matters for deodorizing and antibacterial objects.

In order to achieve the above-mentioned object, the filter medium of the present invention has a photocatalyst function.

Thus, when a filter medium itself has the photocatalyst function, it simultaneously has both a function of capturing floating particles and a function of decomposing organic matters. Consequently, the air filter unit using this filter medium is realized to be small and compact. Furthermore, since the photocatalyst function is free from the lifetime problem, the filter medium and air filter unit using the same can have a long lifetime.

According to the filter medium of the present invention, the preferred embodiments include the below mentioned first and second filter media.

The first filter medium comprises an air permeable layer having a photocatalyst function and an air permeable layer having a function of capturing floating particles.

It is preferable in the first filter medium that the air permeable layer having a photocatalyst function is made from fluororesin that supports the photocatalyst. As mentioned above, since the photocatalyst has a function of decomposing organic matters, a member supporting the photocatalyst is deteriorated when it is made from organic matters. However, when fluororesin is used, the deterioration can be inhibited. That is why fluororesin is preferably used in the present invention. Among the fluororesins, polytetrafluoroethylene (hereinafter, "PTFE" will be referred to) is preferred. PTFE is an extremely stable resin and not deteriorated by the photocatalyst. In addition, there is no possibility that PTFE generates impurities such as boron. Therefore, PTFE is an excellent material for forming a filter medium.

It is preferable in the first filter medium that the air permeable layer having a photocatalyst function is formed of a fluororesin porous film that supports the photocatalyst.

It is preferable in the first filter medium that the air permeable layer having a photocatalyst function comprises PTFE stretched porous film having a structure in which PTFE is fibrillated and intertwined with each other. In the porous film having this structure, the photocatalyst is arranged on the surface of fibers and the surface area is large. Consequently, the porous film has a great photocatalyst effect and further functions to remove floating fine particles.

It is preferable in the first filter medium that the air permeable layer having a photocatalyst function is produced from photocatalyst-containing PTFE secondary particle powder obtained by co-coagulating together with PTFE primary particles in an aqueous dispersion medium by coexisting the photocatalyst in the aqueous dispersion medium at the time of aggregation of PTFE primary particles. It is preferable because such an air permeable layer can include a large amount of photocatalyst. In this case, it is preferable that the proportion of the photocatalyst in PTFE is in the range from 10.1-40 weight % or the range of more than 30 weight % and not more than 50 weight %.

In the first filter medium, it is preferable to have an air permeable support layer in order to improve the mechanical strength.

Next, the second filter medium comprises an air permeable support layer having a photocatalyst function and an air permeable layer having a function of capturing floating particles.

It is preferable in the second filter medium that the air permeable support layer having a photocatalyst function is made from at least one fabric from a woven fabric and a nonwoven fabric of fluororesin fibers that support the photocatalyst.

It is preferable in the second filter medium that the air permeable support layer having a photocatalyst function is produced from paper that supports the photocatalyst.

It is preferable in the second filter medium that the air permeable support layer having a photocatalyst function is produced from photocatalyst-containing PTFE secondary particle powder obtained by co-coagulating together with PTFE primary particles in an aqueous dispersion medium by coexisting the photocatalyst in the aqueous dispersion medium at the time of aggregation of PTFE primary particles. It is preferable because such an air permeable layer can include a large amount of photocatalyst. In this case, it is preferable that the proportion of the photocatalyst in PTFE is in the range from 10.1-40 weight % or the range of more than 30 weight % and not more than 50 weight %.

In addition, it is preferable in the filter medium of the present invention that the photocatalyst is a metal oxide, more preferably an anatase type titanium oxide that is excellent in the photocatalyst function, the most preferably an anatase type titanium dioxide (hereinafter, "titanium oxide" will be referred to). Moreover, examples of metal oxide having a photocatalyst function include e.g. Ti, Zn, Cu, Al, Sn, Fe, W, etc., which can appropriately be used in accordance with the application of use of the filter medium.

Furthermore, for the same reason as the above, it is preferable in the filter medium of the present invention that the air permeable layer having a function of capturing floating particles is a PTFE stretched porous film in which polytetrafluoroethylene is fibrillated and intertwined with each other. Next, in the air filter unit of the present invention, the filter medium of the present invention is housed in a frame in a state in which it is bent in a form of waves and a gap between the filter medium and the frame is sealed. The air filter unit of the present invention is small and compact.

Furthermore, it is preferable in the air filter unit of the present invention that the first and second filter media are bent in a form of waves, wherein these filter media are housed in a frame in a state in which the air permeable layer having a photocatalyst function is located in the upstream of the air stream and the air permeable layer having a function of capturing floating particles is located in the downstream of the air stream, and wherein a gap between said filter medium and said frame is sealed.

With such a structure, even if any photocatalysts are dropped off, they are captured by the air permeable layer having a function of capturing floating particles. Consequently, the photocatalyst will not contaminate clean rooms etc.

### Brief Description of Drawings

FIG. 1 is a cross-sectional view showing a structure of a filter medium of one embodiment of the present invention.
FIG. 2 is a cross-sectional view showing a structure of a filter medium of another embodiment of the present invention.
FIG. 3 is a cross-sectional view showing a structure of a filter medium of a further embodiment of the present invention.
FIG. 4 is cross-sectional view showing a structure of a filter medium of a still further embodiment of the present invention.
FIG. 5 is a perspective view showing an arrangement of a light source in an air filter unit of one embodiment of the present invention.
FIG. 6 is a perspective view showing an arrangement of a light source in an air filter unit of another embodiment of the present invention.
FIG. 7 is a perspective view showing a structure of an air filter unit of one embodiment of the present invention.
FIG. 8 is a cross-sectional view showing a state in which a filter medium of an air filter unit is bent in a form of waves.
FIG. 9 shows a structure of one example of a roll stretching apparatus.
FIG. 10 shows a structure of one example of a tenter stretching apparatus.
FIG. 11 shows a structure of one example of an apparatus for producing nonwoven fabrics.
FIG. 12 shows a structure of the air circulation system.

### Best Mode for Carrying out the Invention

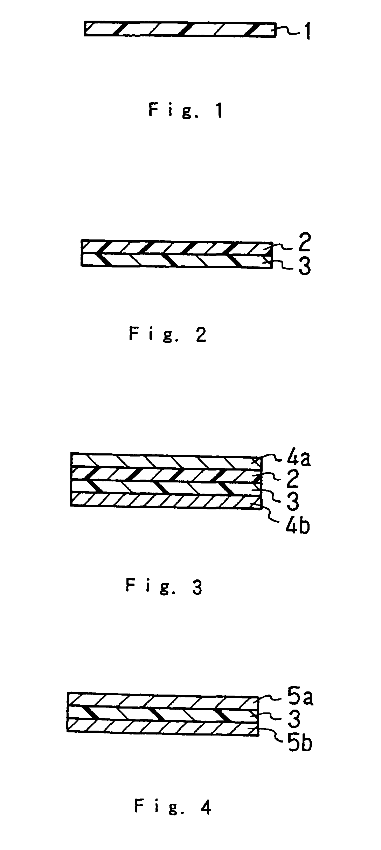

Hereinafter, the embodiments of the present invention will be described. First, a structure example of the filter medium of the present invention will be explained with reference to the cross-sectional views of FIGs. 1 to 4.

A filter medium 1 of the present invention shown in FIG. 1 has a single layer structure. This layer combines a function of capturing floating particles with a photocatalyst function. This structure is the most basic one. Practically, however, the following structure is more preferred.

A filter medium of the present invention shown in FIG. 2 has a structure in which an air permeable layer 2 having a photocatalyst function and an air permeable layer 3 having a function of capturing floating particles are laminated. This filter medium corresponds to the above-mentioned first filter medium. The air permeable layer 2 having the photocatalyst function is preferably fabricated by fluororesin etc. supporting the photocatalyst, particularly, a porous film in which a PTFE film is stretched to be fibrillated and intertwined with each other. Furthermore, the air permeable layer 3 having a function of capturing floating fine particles is preferably a porous layer in which a PTFE film is stretched to be fibrillated and intertwined with each other.

In a filter medium of the present invention shown in FIG. 3, an air permeable layer 2 having a photocatalyst function and an air permeable layer 3 having a function of capturing floating particles of the filter medium shown in FIG. 2 are laminated, and air permeable support layers 4 (4a and 4b) are formed on the both sides of the laminated product. The air permeable support layer 4 can use an air permeable support material such as a nonwoven fabric, a woven fabric, a mesh, other porous films, etc. Examples of the support materials include olefin (e.g. polyethylene, polypropylene, etc.), nylon, polyester, aramid and composites thereof (e.g. a nonwoven fabric of core-sheath structure fibers, a two-layer nonwoven fabric including a low melting point material and a high melting point material, etc.), fluorocarbon air permeable material [e.g. a mesh of PFA (tetrafluoroethylene-perfluoroalkylvinyl ether copolymer), a mesh of FEP (tetrafluoroethylene-hexafluoropropylene copolymer), a PTFE porous film, etc.], and the like. Among these support materials, the nonwoven fabric of core-sheath structure fibers and the two-layer nonwoven fabric including a low melting material and a high melting point material are preferred because these support materials do not shrink at the time of laminating.

A filter medium shown in FIG. 4 is one embodiment of the second filter medium. Namely, in this filter medium, air permeable support layers 5 (5a and 5b) are formed on the both sides of the air permeable layer 3 (which need not always be a single layer) having a function of capturing floating particles, and at least one of the air permeable supporting layers 5 has a photocatalyst function. As previously described, it is preferable that the air permeable support layer 5 is produced by using at least one fabric from a woven fabric and a nonwoven fabric of fluororesin fiber that supports the photocatalyst, or paper that supports the photocatalyst.

The application of use of the filter medium of the present invention is not particularly limited. It can be applied for various kinds of air filter units, etc. for example, middle efficiency, HEPA (High Efficiency Particulate Air), ULPA (Ultra Low Penetration Air) and the like.

Next, in the above-mentioned first filter medium, generally, the thickness of the air permeable layer having a photocatalyst function is 0.5-100 µm, the thickness of the air permeable layer having a function of capturing floating particles is 0.5-1000 µm, and the total thickness including an air permeable support layer is 10-2000 µm. Furthermore, in the second filter medium, generally, the thickness of the air permeable layer having a photocatalyst function is 10-2000 µm, the thickness of the air permeable layer having a function of capturing floating particles is 0.5-1000 µm, and the total thickness is 10-3000 µm.

Next, a method for producing the above-mentioned first filter medium of the present invention will be described. For example, this filter medium can be produced by preparing a uniaxial oriented film of titanium oxide-containing unbaked PTFE and a uniaxial oriented film of semi baked PTFE, superposing these films on top of another, and then stretching these films in the widthwise direction thereof. If necessary the air permeable support material may be laminated after the stretching in widthwise direction.

First, the uniaxial oriented film of titanium oxide-containing unbaked PTFE is produced.

An aqueous dispersion solution (A) of emulsion polymerization PTFE particles and an aqueous dispersion solution (B) of titanium oxide are prepared. The emulsion polymerization PTFE particle usually has a number average molecular weight of 2-10 million and an average particle size of 0.1-0.4 µm. Moreover, the concentration of the emulsion polymerization PTFE particles is usually 10-30 weight %. On the other hand, the titanium oxide usually has an average particle size of 5-100 nm and is usually in the form of powder and used as 10-30 weight % of the aqueous dispersion medium. Then, the above-mentioned two aqueous dispersion solutions are stirred in a coagulation bath provided with a stirring blade and a temperature control jacket, and titanium oxide powder is co-coagulated at the same time of aggregation of PTFE particles so that titanium oxide is included in the aggregated particles of PTFE primary particles, thus forming secondary aggregated particles. Thereafter, the secondary aggregated particles are separated from an aqueous phase by the using a mesh etc., dried in an oven etc., thus preparing titanium oxide-containing PTFE powder. It is preferable that when the titanium oxide-containing PTFE powder is produced by co-coagulating from both dispersion solutions like this way so as to produce titanium oxide-containing PTFE powder, the more titanium oxide can be contained (e.g., it is preferable that the content of titanium oxide is in the range from 10.1-40 weight %, or the range of more than 30 weight % and not more than 50 weight %), because the drawing process, which will be described below, easily can be carried out and titanium oxide is easily exposed uniformly on the surface of the PTFE fibers. It is preferable that this PTFE powder generally contains 1-50 weight % of titanium oxide and is granulate-adjusted to have an average particle size of 300-2000 µm. Furthermore, the apparent density is about 300-700 g/litre.

Next, the titanium oxide-containing PTFE powder is formed in a predetermined shape by using a conventionally known method such as a paste extrusion process. In this forming process, 20-35 parts by weight of forming auxiliaries (liquid lubricant) usually are blended into 100 parts by weight of the titanium oxide-containing PTFE powder. As the forming auxiliaries, any materials that have been used for the conventional paste extrusion process can be used. Furthermore, prior to the paste extrusion, preliminary forming may be carried out. In general, a mixture of the PTFE powder and forming auxiliaries is preliminarily formed, extruded from a paste extruder to be in a cylindrical shape, then the extruded product is rolled to be a film shape by using rollers, etc. and further the forming auxiliaries are drying-removed, thus producing a titanium oxide-containing unbaked PTFE film.

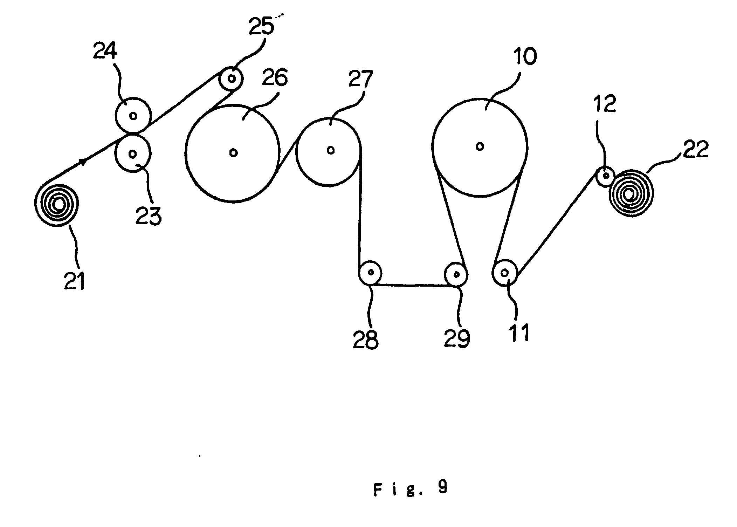

Next, the titanium oxide containing unbaked PTFE film is uniaxially stretched in the longitudinal direction (MD direction, rolling direction). This stretching can be carried out by using, for example, the roll stretching apparatus shown in FIG. 9. In this apparatus, the unbaked PTFE film is drawn off from a film drawing-off roll 21, fed to rolls 23, 24 and 25 and further to rolls 26 and 27, where the film is stretched for a predetermined time in the MD direction. The principle of this stretching resides in the drawing-up speed of the rolls 26 and 27 being faster than that of the film drawing-off roll 21. The stretched film is sequentially fed from rolls 28 and 29, a heat setting roll 10, a cooling roll 11 and a roll 12 in this order, and finally drawn up at a drawing-up roll 22. The film is usually stretched 5-30 times. Furthermore, the temperature at the time of stretching is usually 150-320 °C.

On the other hand, the uniaxially oriented film of semi baked PTFE is produced. The semi baked PTFE is disclosed in detail in Publication of No. JP 59-152825A. Furthermore, the sintering degree is disclosed in Publication No. JP 5-202217A. The present invention follows them.

First, by using the PTFE fine powder and forming auxiliaries, a paste extrusion, rolling and drying-removing of the forming auxiliaries are carried out by a usual processing method similarly to the above, thus producing a semi baked PTFE film. The conditions such as mixing amount of the PTFE fine powder and forming auxiliaries can appropriately be determined. Then, this semi baked PTFE film is stretched in the longitudinal direction (MD direction and rolling direction) by using the roll stretching apparatus (see FIG. 9). At this time, the film is usually stretched 5-30 times, and the temperature at the time of stretching is 200-320 °C.

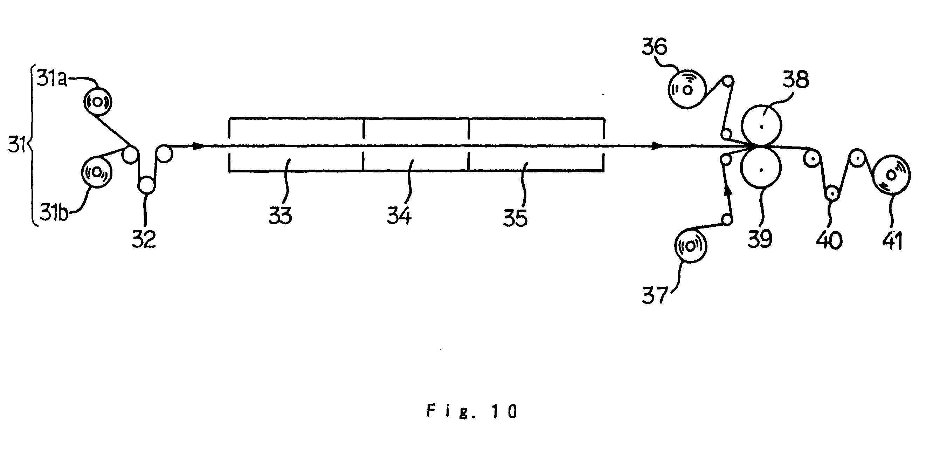

Next, the thus obtained uniaxially oriented film of titanium oxide-containing unbaked PTFE and uniaxially oriented film of semi baked PTFE are superposed on top of another and biaxially stretched in the width direction (TD direction) thereof. This stretching in the TD direction can be carried out by using, for example, the tenter stretching apparatus shown in FIG. 10. This apparatus can continuously clip the both ends of the widthwise direction of the film stretched in the longitudinal direction (MD direction). Namely, in this apparatus, the uniaxially film of the titanium oxide-containing unbaked PTFE and the uniaxially film of semi baked PTFE are superposed on top of another right after they are drawn off from two film drawing-off drums 31 (31a and 31b) respectively, and then the films in this state are fed through a control roll 32, a pre-heating oven 33, a width direction stretching oven 34 and a heat-setting oven 35 in this order. During this feeding, the stretching in the widthwise direction and the heat-setting process are carried out. Thereafter, the films stretched in the width direction are fed to the laminate rolls 38 and 39, and if necessary, they are laminated on the air permeable support material fed from air permeable support materials drawing-off rolls 36 and 37. Sequentially, the laminated film is finally drawn up at the drawing-up drum 41 via a control roll 40. Moreover, in the stretching in the MD direction, the film is usually stretched 5-50 times, and the stretching temperature is 200-300 °C. Moreover, it is preferable that at least two uniaxial oriented films of semi baked PTFE are superposed from the viewpoint of the mechanical strength and the trapping efficiency.

Thus, the filter medium having a structure shown in FIG. 3 is produced. In this filter medium, the air permeable layer 2 having a photocatalyst function is produced from a porous film in which titanium oxide-containing PTFE fibers are intertwined with each other, the air permeable layer 3 having a function of capturing floating particles is produced from a porous film in which PTFE fibers are intertwined with each other, and the air permeable support layer 4 is produced from a nonwoven fabric etc. This filter medium sufficiently functions as the HEPA filter and ULPA filter.

In this filter medium, an activated carbon fiber nonwoven fabric may be used for the air permeable support layer 4. Since the activated carbon fiber nonwoven fabric has the same function as a chemical filter, the performance of removing organic matters of the filter medium of the present invention is more excellent. Similarly, in the formation of the air permeable layer 2 having a photocatalyst function, an adsorbent such as activated carbon, zeolite, etc. may be mixed with the photocatalyst so that they are supported by the air permeable layer.

In this producing method, the uniaxial oriented film of titanium oxide-containing semi baked PTFE in place of the uniaxial oriented film of titanium oxide-containing unbaked PTFE and the uniaxial oriented film of unbaked PTFE in place of the uniaxial oriented film of semi baked PTFE may be used, respectively.

Furthermore, the air permeable layer 2 having a photocatalyst function comprising a porous film in which titanium oxide-containing PTFE fibers are intertwined with each other also has a function of capturing floating particles. Therefore, in the production method, when the uniaxial oriented film of titanium oxide-containing unbaked PTFE is stretched in the widthwise direction under the predetermined conditions, the single-layer filter medium shown in FIG. 1 can be produced.

In the above-mentioned production method, when the step of laminating the air permeable support material such as nonwoven fabric etc. is omitted, the filter medium shown in FIG. 2 can be produced.

Next, a method for producing the above-mentioned second filter medium will be described. For example, the second filter medium can be produced by laminating an air permeable support material having a photocatalyst function and a air permeable film having a function of capturing floating particles.

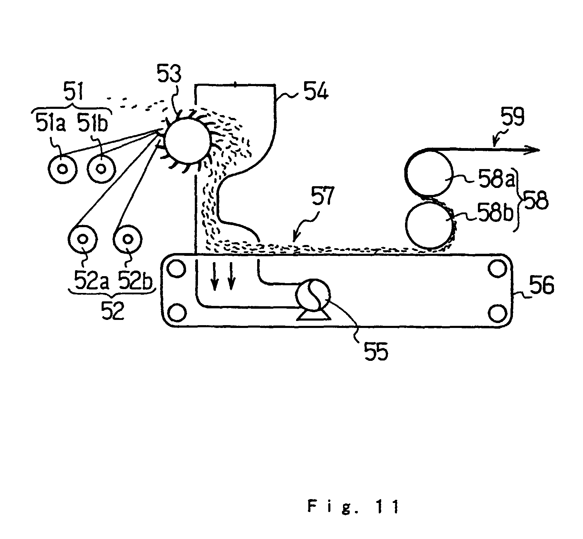

First, the air permeable support material having a photocatalyst function is produced. Examples of the air permeable support material include, for example, a nonwoven fabric of PTFE fibers that support the photocatalyst, which can be produced by using the apparatus of FIG. 11 by the following method (Publication No.WO 96/10668).

First, the titanium oxide-containing unbaked PTFE film is produced by the method described in the production method of the first filter medium. The thickness of this film is usually 50-250 µm. Then, this film is sintered. The sintering temperature is usually 350-380 °C. Thereafter, this titanium oxide-containing sintered PTFE film is stretched about 2.5-10 times in the longitudinal direction by using the roll stretching apparatus etc. shown in FIG. 9.

Next, the thus obtained uniaxially oriented film of titanium oxide-containing sintered PTFE (hereinafter "starting material fabric PTFE film") is opened by using the apparatus shown in FIG. 11 so as to produce a webs. And nonwoven fabric is produced by using the webs. The apparatus shown in FIG. 11 comprises a pin blade roll 53 that opens the starting material fabric film so as to produce webs, starting material fabric film rolls 51 and 52 from which the starting material fabric film is led out, a hood 54 for preventing the produced webs from scattering, a blower 55 for collecting webs by blowing the air from the hood 54, a belt conveyor 56 for conveying webs, and a pair of nip heat rolls 58 (58a and 58b) for producing a nonwoven fabric from webs. A half side of the pin blade roll 53 where the webs are generated is located inside the hood 54. The hood 54 and the nip heat rolls 58 are connected with each other by the belt conveyor 56.

By using this apparatus, the nonwoven fabric is produced by the following method. The starting material fabric PTFE film is led out to the pin blade roll 53 from the starting material fabric rolls 51 (51a and 51b) and opened. At this time, in general, the starting material fabric film for laminating is simultaneously led out from the starting material fabric roll 52 (52a and 52b) to the pin blade roll 53, because it is difficult to laminate a nonwoven fabric consisting of only PTFE fiber. Other examples of the starting material fabric films include, for example, polypropylene film, PFA film, polyethylene film, polyester film, ETFE film, FEP film and the like. Thereafter, when the starting material fabric PTFE film and starting material fabric film for laminating are simultaneously opened, mixed webs 57 in which each resin fiber is uniformly mixed are generated in the upper part of the hood 54. Then, the mixed webs 57 are drawn to the lower part of the hood 54 by the air stream generated by the blower 55 and placed on one end of the belt conveyor 56 located there. Then, the mixed web 57 is fed to the nip heat roll 58 by means of the belt conveyor 56, wherein the mixed web 57 is nipped in a heated state and processed into a nonwoven fabric 59. Thus, a nonwoven fabric of titanium oxide-containing PTFE fibers can be produced. The composition of the nonwoven fabric can be adjusted by the number of bobbins (number of rolls) etc. of the starting material fabric PTFE film and the starting material fabric film for laminating. Furthermore, the basis weight of the nonwoven fabric can be adjusted by the conveying speed of the belt conveyor.

Moreover, this method is called a splitting method. Besides this method, the nonwoven fabric of titanium oxide-containing PTFE fiber can be produced by a method of slitting and fibrillating the starting material fabric film (see the methods disclosed in Publication of No. JP 36-22915A and No. JP 48-8769A).

On the other hand, the air permeable film having a function of capturing floating particles is produced. For example, this film can be produced by the method for producing the first filter medium described above. The air permeable film produced by this method is a porous film in which PTFE fibers are intertwined with each other.

Then, the nonwoven fabric of titanium oxide-containing PTFE fibers and the air permeable film having a function of capturing floating particles are laminated to thus produce the second filter medium. The laminating conditions (temperature, pressure, etc.) are appropriately determined depending upon the types of the starting material fabric film for laminating. Furthermore, the layer having a function of capturing floating particles may be sandwiched by the above-mentioned support material (the materials formed by PP, PET, etc.). Moreover, as the air permeable layer having a function of capturing floating particles, besides the air permeable film, a conventionally used filter such as glass fibrous HEPA, ULPA, etc. may be used.

As the air permeable support material, besides the nonwoven fabric of titanium oxide-containing PTFE fibers, as previously mentioned, a material in which the conventionally used air permeable support material that supports titanium oxide may be used. Furthermore, in addition to the above-mentioned examples of the conventional air permeable support materials, monofilament etc. formed by fluororesin such as PFA, FEP, ETFE, PVDF, etc. can be used. Among them, a woven fabric of fluororesin fibers supporting titanium oxide is particularly preferred. The method for supporting titanium oxide includes, for example, a method of adhering titanium oxide to the air permeable support material by using a perfluoro rubber as an adhesive, Examples of the perfluoro rubber include, for example, tetrafluoroethylene-perfluoroalkylvinyl ether copolymer, a tetrafluoroethylene-hexafluoropropylene copolymer, and the like. Furthermore, the adhering method includes a method in which an aqueous dispersion solution of perfluoro rubber and an aqueous dispersion solution of titanium oxide are mixed, the mixture is applied onto the air permeable support material and then the solvent (water) is drying-removed.

Furthermore, when paper is used for the air permeable material, the mixture of perfluoro rubber and titanium oxide may be impregnated with the paper, and then the solvent (water) may be dried and removed. Thus, inside the paper, titanium oxide is also supported.

Furthermore, when the supporting method in which perfluoro rubber is used as a binder is employed, the air permeable layer etc. having a function of capturing floating particles, in addition to the air permeable support material, can support the titanium oxide. For example, the filter of glass fibrous HEPA, ULPA, etc. can support the titanium oxide by using a perfluoro rubber by the above-mentioned method.

In the second filter medium, in the formation of the air permeable support material having a photocatalyst function, when adsorbent such as activated carbon, zeolite, etc. is used along with the photocatalyst, the filter medium can have the same function as a chemical filter. Thus, the function of removing organic matters is further improved.

Next, an air filter unit of the present invention will be described.

In the air filter unit of the present invention, the filter medium of the present invention is housed in a frame in a state in which it is bent in a form of waves and a gap between the filter medium and the frame is sealed.

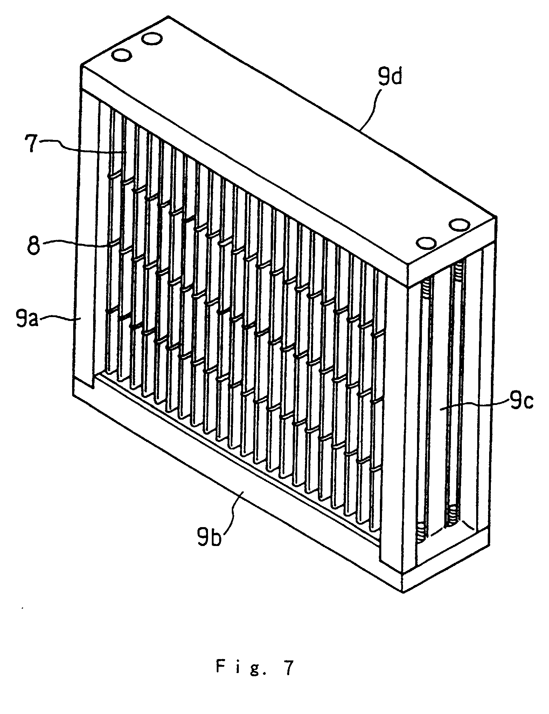

FIG. 7 is a perspective view showing one example of an air filter unit of the present invention. As shown in FIG. 7, this air filter unit is called a mini-pleat type. A filter medium 7 is generally bent to have waves of 25-50mm widths, and one of the spaces of the waves (the space between the peaks of two waves) is usually 2-5mm. The spaces are kept by plural spacers 8 formed in a ribbon shape or a belt shape with hotmelt adhesive (e.g., Diabond (trade name)). The distance between two spacers 8 is usually about 25-50mm. The filter medium 7 is housed in a frame having four frame members (9a, 9b, 9c and 9d), and a gap between the frame and the filter medium 7 is sealed so as to be hermetically sealed. The sealing is carried out by using, for example, a hotmelt adhesive (e.g. Diabond (trade name)). The size of the air filter unit of the present invention can be determined appropriately in accordance with the application of use.

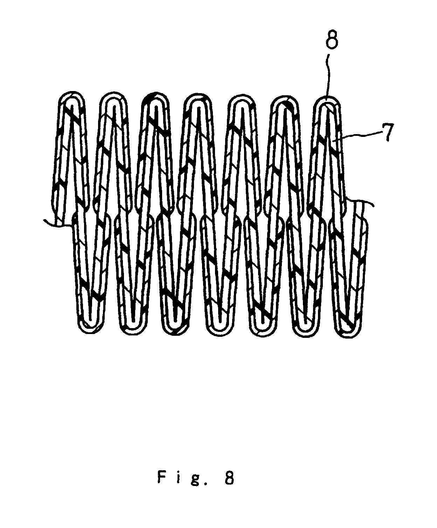

FIG. 8 is a cross sectional view showing the spacer 8 portion of the filter medium 7 of the air filter unit. As shown in FIG. 8, the spacers 8 are formed for respective peaks of the wave-like bent filter medium, so that the cross section of each spacer is substantially V-shaped along with the wave of the filter medium. Though the length of the spacers 8 is appropriately determined depending on the bending width of the filter medium, in general, it is preferable that the length of one side of the substantially V-shaped spacer is about the half length of the bending width. For example, it is preferable that when the bending width of the filter medium is about 40mm, the length of one side of the substantially V-shaped spacer 8 is preferably about 20mm. By forming the spacers 8, the wave shape of the filter medium 7 can be maintained, which makes it possible to pass air uniformly.

In the air filter unit of the present invention, as previously mentioned, when the above-mentioned first and second filter media of the present invention are used, it is preferable that the filter media are housed in the frame in a state in which the air permeable layer having a photocatalyst function is located in the upstream of the air stream and the air permeable layer having a function of capturing floating particles is located in the downstream of the air stream.

The performance of the air filter unit of the present invention can be determined appropriately by selecting a filter medium in accordance with the use of application.

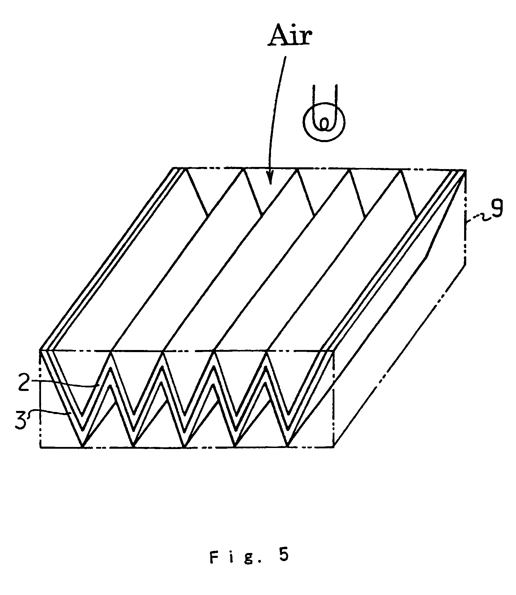

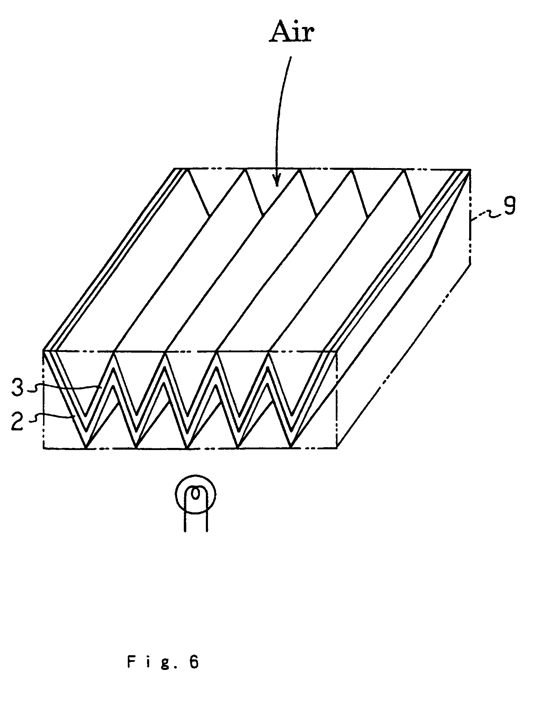

Next, the air filter unit of the present invention may have a structure in which a light source is included, because the photocatalyst function can not be exhibited without light, and furthermore the deodorizing effect and antibacterial effect, etc. cannot be obtained. When, for example, titanium oxide is used, an ultraviolet lamp preferably is used as the light source. Furthermore, the way of placing the light source is not particularly limited as long as light is irradiated to the air permeable layer having a photocatalyst function or the air permeable support layer having a photocatalyst function. In general, as shown in FIG. 5, the air permeable layer 2 having a photocatalyst function is located in the upstream of the air stream and the air permeable layer 3 having a function of capturing floating particles is located in the downstream of the air stream. Furthermore, the light source is arranged in the upstream of the air stream. In FIG. 5, numeral 9 is a frame. With such a structure, if any photocatalysts are dropped off, they are captured by the air permeable layer 3 having a function of capturing floating particles. Furthermore, when the air filter unit of the present invention is used for household air cleaning apparatus in which it is physically difficult to mange a light source (lamp) in the upstream of the air stream, as shown in FIG. 6, the light source can be included in a way in which the air permeable layer 3 having a function of capturing floating particles is located in the upstream of the air stream shown by arrow, the air permeable layer 2 having a photocatalyst function is located in the downstream of the air stream shown by arrow, and the light source (lamp) is located opposing the air permeable layer 2. In FIG. 6, numeral 9 is a frame. Moreover, it is preferable to include the light source. However, when natural light can be used, it is not necessary to include the light source.

Furthermore, the air filter unit of the present invention may include the conventional chemical filter in accordance with the application of use.

The air filter unit of the present invention can be applied in a wide range of applications, not only for application that is accompanied with a problem of removing floating particles but also for the application that is accompanied with a problem of removing microorganisms or organic matters. Examples of the applications include application for various kinds of clean rooms in the field of semiconductor manufacturing, hospitals, pharmaceutical industries, precision instruments, food, etc. Furthermore, the air filter unit of the present invention can be used for various kinds of apparatus for manufacturing semiconductor, for example, diffusion furnace, wet station, apparatus having a problem of coping with ammonia (exposure system), etc. In addition, it can be used for household air cleaning apparatus.

Next, the present invention will be described with reference to the following Examples. Hereinafter, the average porous diameter and the pressure loss were measured by the below mentioned method.

### (Average porous diameter)

A mean flow pore (MFP) size that is measured in accordance with the description of ASTM F-316-86 was made an average particle size. The actual measurement was carried out by using Coulter Porometer (produced by Coulter Electronics, UK). The average porous particle size means an average value of plural porous diameters measured in one place. One sample was measured in 10 points, and thus 10 average porous diameters were obtained.

### (Pressure loss)

A sample was cut into a circle shape of 47mm diameter, and was then set on a filter holder having 12.6cm² permeation effective area. Then, the side of entrance was subjected pressure at 0.4kg/cm² and an amount of the air stream flowing from the exit side was adjusted to a permeating rate of 5.3 cm/second by using a flowmeter (produced by Uejima Co., Ltd., which is used hereinafter), and at this time the pressure loss was measured by a manometer.

### Example 1

### (1) Production of titanium oxide-containing PTFE raw material powder

10 weight % aqueous dispersion solution containing 8kg of emulsion-polymerization PTFE particles (number average molecular weight: 5 million, an average particle size: about 0.3 µm) and 20 weight % aqueous dispersion solution containing 2kg of titanium oxide (Titanium Dioxide P25 produced by Japan Aerosil, average particle size: 21nm) were simultaneously poured into a coagulating bath provided with stirring blade and a temperature control jacket (volume: 150 liter, temperature inside the bath: 30 °C) and stirred, thus forming secondary coagulated particles in which PTFE particles and titanium oxide were uniformly aggregated. The secondary aggregated particles were separated from an aqueous phase by using a mesh and dried in an oven (130 °C), thus obtaining a PTFE powder (average particle size: 500 µm, apparent density: about 450g/litre) containing 20 weight % titanium oxide.

### (2) Production of titanium oxide-containing unbaked PTFE film

100 parts by weight of titanium oxide-containing PTFE powder obtained in the above (1) was mixed with 25 parts by weight of forming auxiliaries (petroleum solvent, "ISOPAR M" produced by Exson) so as to make paste state. This paste was extruded from a paste extruder to be cylindrical shape, and the extruded material was rolled by using rollers. Then, the forming auxiliaries were removed by drying. Thus, a titanium oxide-containing unbaked PTFE film, which was a continuous film having a width of 200 mm and the thickness of 150 µm, was obtained.

### (3) Production of uniaxial oriented film

This unbaked PTFE film was slit into a width of 160 mm, then stretched 10 times in an MD direction (longitudinal direction) by using a roll stretching apparatus. The width of the stretched film was 145 mm. The stretching conditions were as follows.
Roll 26: surface temperature of the roll:300 °C, peripheral velocity :1.1m/min
Roll 27: surface temperature of the roll: 300 °C, peripheral velocity :11m/min

### (4) Production of uniaxial oriented film of semi baked PTFE

On the other hand, a uniaxial oriented film of semi baked PTFE was produced by the following method. First, a paste extrusion, rolling, drying-removing of the forming auxiliaries were carried out in the same method as in the above (2) except that titanium oxide-containing PTFE powder (POLYFLON FINE POWDER F104 produced by Daikin Industries, Ltd.) was used in place of titanium oxide-containing PTFE powder, an unbaked PTFE film having a thickness of 100 µm was produced. This unbaked PTFE film was heat processed in an oven at 338°C for 45 seconds to obtain a semi baked film having a sintering degree of 0.40. Then, this semi baked PTFE film were stretched 15 times in a longitudinal direction by using a roll stretching apparatus shown in FIG. 9. The stretching conditions at this time were as follows.
Roll 23 and 24: drawing-off speed: 0.5 m/min, room temperature, film width of 200mm
Roll 26: peripheral velocity: 4m/min, temperature: 300°C
Roll 27: peripheral velocity: 7.5m/min, temperature: 300°C
Roll 10: peripheral velocity: 7.5m/min, temperature: 25°C
Roll 22: drawing up speed: 7.5m/min, room temperature, film width of 145mm

### (5) Production of filter medium

Next, the uniaxial oriented film of titanium oxide-containing unbaked PTFE and two oriented films of semi baked PTFE were stretched about 34 times by using the tenter stretching apparatus shown in FIG. 10 in the widthwise direction (TD direction) followed by heat-setting, thus producing a filter medium having a structure shown in FIG. 2. The conditions of stretching in widthwise direction and heat-setting were as follows.
Feeding speed of the film: 3m/min
Temperature of pre-heating oven: 305°C
Temperature of widthwise direction stretching oven: 320°C
Temperature of heat-setting oven: 370°C

The average porous diameter of the thus obtained filter medium ranges from 0.3-0.6 µm (measurement points: randomly selected 10 points).

### (7) Laminating of air permeable support material

The stretching in the widthwise direction was followed by in-line laminating a nonwoven fabric on both sides of the filter medium by using the laminating apparatus of the tenter stretching apparatus shown in FIG. 10. The kinds of nonwoven fabrics and laminating conditions were as follows.
Upper nonwoven fabric: ELEVES T1003WDO produced by Unitika Ltd.
Lower nonwoven fabric: ELFIT E0303WDO produced by Unitika Ltd.
Temperature of heat roll: 190°C

Thus, the filter medium having a structure shown in FIG. 3 was produced. The pressure loss of this filter medium ranges from 25mmH₂O - 40mmH₂O (measurement points: randomly selected 10 points).

### (8) Production of air filter unit

Next, an air filter unit was produced by using the above-mentioned filter medium. First, the filter medium having a full length of 21m and an aluminum frame (depth of 65mm) having a square shape (outer length of one side of the square: 610 mm) at the side of the air stream passing were prepared. Thereafter, the width of the filter medium was cut and pleated so that it was able to be in the frame, then the filter medium was housed in the frame and a gap between the filter medium and frame was sealed by using polyurethane adhesives (KU850 produced by KONISHI CO., LTD), thus producing the air filter unit having a square shape (effective size: one side of about 580 mm) at the side of the air stream passing (see FIG. 7). Moreover, in the filter medium, in order to maintain the regular pleating intervals, spacers were formed by using holtmelt adhesives (see FIG. 8).

### (9) Evaluation of performance of air filter unit

By the below mentioned method, the trapping efficiency of the air filter unit, an outflow of titanium oxide particles and photocatalyst function were examined. The methods and results are shown below.

### (Trapping efficiency)

In the air stream, an air filter unit was arranged so that a titanium oxide-containing PTFE layer is located in the upstream of the air stream, when the pressure loss was measured by using a manometer under the conditions where the surface velocity of the air filter unit was 0.5 m/second, it was 10mmH₂O. DOP particles generated by a particle generator under the same condition were flowed in from the upstream at the concentration of 10⁷ particles/ft³ and then the trapping performance of the filter was measured. The measured result showed the performance of removing 99.9995% of DOP particles of 0.1-0.12 µm. Moreover, the measurement of the trapping efficiency was carried out by using particle counter (LAS-X-CRT produced by PARTICLE MEASURING SYSTEM INC (PMS). (USA)), which is used hereinafter).

### (Outflow of titanium oxide particles)

Particles in the downstream were measured for 48 hours by using a particle counter in combination with aggregation particle counter (MODEL3022A produced by NIPPON KANOMAX) capable of measuring the particles of 7nm or more for 48 hours under the same conditions of the arrangement of the air filter unit and air stream except that an HEPA filter capable of removing 0.3 µm particles in 99.97% was set in the midway of the air stream as a prefilter and DOP particles were not flowed in. This measurement was carried out by continuously using the particle counter for 48 hours and by intermittently using the aggregated particle counter for one minute every one hour. As a result of this measurement, no particles were noted in any counters. This result shows that there is no titanium oxide flow out from the air filter unit.

### (Photocatalyst function)

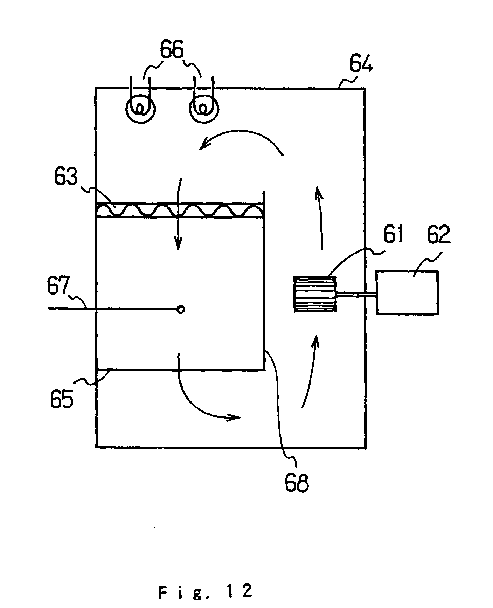

A sealable air circulation system shown in FIG. 12 was provided with an air filter unit 63. As shown in FIG. 12, this air circulation system is a square box covered with walls 64 in six directions. This air circulation system comprises a fan 61 connected to a variable-speed drive apparatus 62, two black lights 66 (Neolums Super 15W produced by Mitsubishi Electric Corp.) installed in one of the walls 64, a rating 65 and a guide plate 68 that forms a path for the air stream. The air filter unit 63 is arranged in the midway of the path, in a state in which the titanium oxide-containing layer is opposed to the two black lights. Furthermore, the grating 65 is also arranged in the midway of the path. A detecting part 67 of a gas monitor (Model 1302 produced by B&K CO., LTD.) is located between the air filter unit 63 and the grating 65. The whole volume of the air circulation system is about 2m³. In this air circulation system, the air circulates as follows. The variable-speed drive 62 rotates the fan 61 to thus generate air stream. The generated air stream flows along the guide plate 68 and the walls 64, passes through the air filter unit 63, further passes though the grating 65, and goes back to the location of the fan 61 (see the arrows in FIG. 12).

The photocatalyst function was examined by using this air circulation system as follows. First, ammonia gas was introduced from the detecting part 67 of a gas monitor to inside the air circulation system so that the ammonia concentration was 10ppm. As a control, air (amount of air flown by fan: 2m³/min) was circulated for 48 hours without lighting the black light 66, then the concentration of the ammonia was measured. As a result, no change in ammonia concentration was observed. Sequentially, the black light 66 was turned on and the change of the concentration was measured over time with the gas monitor. As a result, the ammonia concentrations were 8ppm after 24 hours and 6ppm after 48 hours, showing that the ammonia concentration was reduced.

### Example 2

### (1) Production of starting material fabric PTFE film

An unbaked titanium oxide-containing PTFE film was produced by the same method as the Example 1 except that the film thickness was 50 µm and the film width was 210 mm. This film was sintered by passing in a oven at 360 °C for about 3 minutes. Sequentially, this sintered film was stretched 5 times in a longitudinal direction of the film by using the roll stretching apparatus shown in FIG. 9. The stretching conditions are as follows.
Roll 26: surface temperature of the roll: 300 °C, peripheral velocity :1m/min
Roll 27: surface temperature of the roll: 300 °C, peripheral velocity :5m/min

### (2) Production of titanium oxide-containing nonwoven fabric

A nonwoven fabric of PTFE fibers and polypropylene fibers was produced from the starting material fabric PTFE film and a tow (bunch) of 2 denier polypropylene fibers by using the apparatus shown in FIG. 11. This nonwoven fabric had the basis weight of 50g/m² and thickness of 300 µm. The weight ratio of the both fibers was about 1:1 and the pressure loss was 2-3 mmH₂O. Moreover, the measurement of the pressure loss was the same as that of the nonwoven fabric of Example 1.

### (3) Production of a filter medium

First, a uniaxial oriented film of semi baked PTFE was produced by the same method as Example 1. Two of the thus produced films were superposed on top of another and stretched in the widthwise direction by using the tenter stretching apparatus of FIG. 10 in the same method as Example 1. Then, two nonwoven fabrics were laminated onto the film that had been stretched in the widthwise direction by the same method as Example 1 except that the titanium oxide-containing nonwoven fabric was used for the upper nonwoven fabric, thus forming a filter medium. The pressure loss of this filter medium was 20-35 mmH₂O.

### (4) Production and performance evaluation of the filter unit

An air filter unit was produced by the same method as Example 1 except that the above-mentioned filter medium was used. Then, the air filter unit was arranged in the same way as Example 1 except that the side of titanium oxide-containing nonwoven fabric was arranged in the upstream of the air stream. Then, the trapping efficacy, the outflow of titanium oxide and the photocatalyst function were evaluated. The results are shown in the following Table 1.

### Example 3

### (1) Production of a titanium oxide-containing nonwoven fabric

A titanium oxide-containing nonwoven fabric was produced by the same method as Example 2 except that 10 denier FEP fibers were used in place of polypropylene fibers and the nip heat roll temperature was 300 °C. The characteristics of this nonwoven fabric were: basic weight of 75g/m², thickness of 310 µm, pressure loss of 2-4 mmH₂O and the weight ratio of PTFE fiber and FEP fiber (PTFE fiber : FEP fiber) was 2 : 1. Moreover, the measurement of the pressure loss was the same as that of the nonwoven fabric of Example 1.

### (2) Production of a filter medium

First, a uniaxial oriented film of semi baked PTFE was produced by the same method as Example 1. Two of the thus produced films were superposed on top of another and stretched in the widthwise direction by using the laminating device of the tenter stretching apparatus of FIG. 10 by the same method as Example 1. Then, the titanium oxide-containing nonwoven fabric was laminated onto one side of the film that had been stretched in the widthwise direction by using a laminating device of the tenter stretching apparatus by the same method as Example 1 except that the titanium oxide-containing nonwoven fabric was used for the upper nonwoven fabric, lower nonwoven fabric was not used, and the heat roll temperature was 300 °C. Then, the lower nonwoven fabric that is the same as Example 1 was laminated on another side of the above-mentioned laminated product at the heat roll temperature of 190 °C by using the laminating device, thus producing a filter medium. The pressure loss of this filter medium was 20-40 mmH₂O.

### (3) Production and performance evaluation of the filter unit

An air filter unit was produced by the same method as Example 1 except that the above-mentioned filter medium was used. Then, the air filter unit was arranged by the same method as Example 1 except that the side of the titanium oxide-containing nonwoven fabric was arranged in the upstream of the air stream. Then, trapping efficacy, outflow of titanium oxide and photocatalyst function were evaluated. The results are shown in the following Table 1.

**Table 1**

| | Example 2 | Example 3 |
|---|---|---|
| Pressure loss of unit | 9 mmH₂O | 10 mmH₂O |
| Trapping efficiency of particles by 0.1-0.2 DOP | 99.9994% | 99.9996% |
| Measurement of outflow of particles for 48hours | None | None |

| Photocatalyst function (ammonium concentration) | | |
|---|---|---|
| Initial concentration | 10ppm | 10ppm |
| Concentration after 24hours | 8ppm | 7ppm |
| Concentration after 48hours | 5ppm | 5ppm |

Table 1 shows that both of the air filter units of Examples 2 and 3 had small pressure loss, high trapping efficiency, function of eliminating ammonia, and no outflow of titanium oxide.

### (Reference)

The case where titanium oxide-containing PTFE powder was prepared by the co-coagulation method and the case prepared by dry blend method were compared.

### (Coagulation method)

An aqueous dispersion solution of emulsion-polymerization PTFE particles (average particle size: 0.3 µm, number average molecular weight: 5 million, concentration: 10 weight %, equivalent of 4kg PTFE) and an aqueous dispersion solution of titanium oxide (titanium oxide p-25 produced by Japan Aerosil, concentration : 10 weight %, equivalent of 1kg titanium oxide) were mixed and stirred in a 50 liter volume stirring bath so as to obtain an aggregated material of PTFE and titanium oxide. This aggregated material was dried in a drying furnace at 150°C and water was removed to thus form powder ①. This powder ① contained 20 weight % of titanium oxide and had an average diameter of 440 µm, and the apparent density of 0.45.

### (Dry blend method)

The same aqueous dispersion solution of PTFE particles as the above was blended and stirred in a 50 liter stirring bath so as to obtain a PTFE aggregated material of PTFE. This aggregated material was dried in a drying furnace at 150 °C and water was removed to form powder. This powder had an average diameter of 450 µm and the apparent density of 0.45. Then, this PTFE powder and titanium oxide powder were adjusted to the total weight of 500g, placed in a 2 liter polyethylene wide-mouthed bottle and mixed by shaking. In this mixing, the powder obtained by mixing 5 weight % titanium oxide with respect to PTFE powder was made to be powder ②, and the powder obtained by mixing 20 weight % titanium oxide with respect to PTFE powder was made to be powder ③.

### (Blending of forming auxiliaries)

500 parts by weight each of the powder ①, powder ② and powder ③ was placed in the wide-mouthed bottle. Furthermore, 25 parts by weight of forming auxiliaries (petroleum solvent, ISOPAR M produced by Exson) were added therein and mixed by shaking.

### (Evaluation of each powder)

Each of the powder ①, powder ② and powder ③ to which the forming auxiliaries were added was paste extruded by using a die having a cylinder diameter of 50 mm and die diameter of 6mm. The forming property (an appearance of the extruded product) of the extruded product was evaluated. Furthermore, this formed product was rolled by a calendar roll, and its rolling property (the appearance when the thickness was 100µm) was evaluated. Then, the stretching property (possibility of stretching 5 times was examined under the conditions of film width: 20mm, chuck tube: 50m, and at rolling temperature of 300°C) of the sintered product (sintering temperature: 370°C) of the above-mentioned rolled film, and the distribution of titanium oxide in the sintered product (5 points randomly collected from the film and scanned by an X-ray microanalyzer at 50 times magnification of electron microscope) were evaluated. The results are shown in Table 2.

**Table 2**

| | Powder ① | Powder ② | Powder ③ |
|---|---|---|---|
| Forming property | Normal | Not normal | Not normal |
| | Linear formed product | Irregular meander shaped formed product | Cracks partially occur on the formed product surface |
| Rolling property | Normal | Not normal | Not normal |
| | Stable long length film | Unstable in film width | Film was cut in some points |
| Stretching property | Normal | Not normal | Not normal |
| | Stretching stably | broken in 2-3 per 10 samples | Broken in all samples |
| Distribution of titanium oxide | Uniform | Ununiform to some degree | Considerably ununiform |

Table 2 shows that when titanium oxide-containing PTFE powder was prepared by the co-coagulation method, even if too much titanium oxide was contained, each of property, i.e. the forming property, the rolling property the stretching property and the distribution of titanium oxide was excellent. On the other hand, when titanium oxide was prepared by the dry blend method, each of the above-mentioned properties was inferior to those prepared by the co-coagulation method.

### Industrial Applicability

As mentioned above, the filter medium of the present invention has both the function of capturing floating fine particles and the photocatalyst function. Therefore, the air filter unit using the same of the present invention is small and compact as compared with the conventional air cleaning apparatus. In addition, the photocatalyst has no problem about lifetime, thus the filter medium and the air filter unit using the same of the present invention realize a long lifetime. Therefore, the use of the air filter unit of the present invention permits the effective use of space in the applications intended to remove floating particles, removing organic gases, deodorization and antibacterial objects. Since the air filter unit of the present invention has a long lifetime, it permits the continuous use of cleaning rooms etc. without stopping the operation. Consequently, it is expected that high quality products can be produced at low cost in various fields, e.g. semiconductor, precision instrument, pharmaceutical, food industries, etc. Furthermore, when the air filter unit of the present invention is used for household air cleaners or medical air cleaners etc., since they are small and compact, thus enabling the living environment or medical place to be clean and comfortable space.

## Claims

1. A filter medium having a photocatalyst function.

2. The filter medium according to claim 1, comprising an air permeable layer having a photocatalyst function and an air permeable layer having a function of capturing floating particles.

3. The filter medium according to claim 2, wherein said air permeable layer having a photocatalyst function is made from fluororesin that supports the photocatalyst.

4. The filter medium according to claim 3, wherein said fluororesin that supports the photocatalyst is polytetrafluoroethylene.

5. The filter medium according to claim 4, wherein said air permeable layer having a photocatalyst function comprises polytetrafluoroethylene stretched porous film having a structure in which polytetrafluoroethylene is fibrillated and intertwined with each other.

6. The filter medium according to claim 5, wherein said air permeable layer having a photocatalyst function is produced from photocatalyst-containing polytetrafluoroethylene secondary particle powder obtained by co-coagulating together with polytetrafluoroethylene primary particles in an aqueous dispersion medium by coexisting the photocatalyst in the aqueous dispersion medium at the time of aggregation of polytetrafluoroethylene primary particles.

7. The filter medium according to claim 6, wherein the proportion of the photocatalyst in polytetrafluoroethylene is in the range from 10.1 to 40 weight %.

8. The filter medium according to claim 6, wherein the proportion of the photocatalyst in polytetrafluoroethylene is more than 30 weight % and not more than 50 weight %.

9. The filter medium according to any one of claims 2 to 8, comprising an air permeable support layer.

10. The filter medium according to claim 1, comprising an air permeable support layer having a photocatalyst function and an air permeable layer having a function of capturing floating particles.

11. The filter medium according to claim 10, wherein said air permeable support layer having a photocatalyst function is made from at least one fabric from a woven fabric and a nonwoven fabric made of fluororesin fibers that support the photocatalyst.

12. The filter medium according to claim 10, wherein said air permeable support layer having a photocatalyst function is produced from paper that supports the photocatalyst.

13. The filter medium according to claim 10, wherein said air permeable layer having a photocatalyst function is produced from photocatalyst-containing polytetrafluoroethylene secondary particle powder obtained by co-coagulating together with polytetrafluoroethylene primary particles in an aqueous dispersion medium by providing the photocatalyst in the aqueous dispersion medium at the time of aggregation of polytetrafluoroethylene primary particles.

14. The filter medium according to claim 13, wherein the proportion of the photocatalyst in polytetrafluoroethylene is in the range from 10.1 to 40 weight %.

15. The filter medium according to claim 13, wherein the proportion of the photocatalyst in polytetrafluoroethylene is more than 30 weight % and not more than 50 weight %.

16. The filter medium according to claim 1, wherein said photocatalyst is a metal oxide.

17. The filter medium according to claim 16, wherein said metal oxide is an anatase-type titanium oxide.

18. The filter medium according to claim 2, wherein said air permeable layer having a function of capturing floating particles is a polytetrafluoroethylene stretched porous film in which polytetrafluoroethylene is fibrillated and intertwined with each other.

19. An air filter unit in which a filter medium of claim 1 is housed in a frame in a state in which it is bent in a form of waves, wherein a gap between said filter medium and said frame is sealed.

20. An air filter unit comprising a filter medium of claim 2 that is bent in a from of waves, wherein said filter medium is housed in a frame in a state in which the air permeable layer having a photocatalyst function is located in the upstream of the air stream and the air permeable layer having a function of capturing floating particles is located in the downstream of the air stream, and wherein a gap between said filter medium and said frame is sealed.
